(19) Europäisches Patentamt
European Patent Office
Office européen des brevets

(11) **EP 3 562 001 A1**

(12) **EUROPÄISCHE PATENTANMELDUNG**

(43) Veröffentlichungstag:
**30.10.2019 Patentblatt 2019/44**

(51) Int Cl.:
*H02K 7/09* *(2006.01)*    *F16C 32/04* *(2006.01)*

(21) Anmeldenummer: **18169857.2**

(22) Anmeldetag: **27.04.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Köhler, Bert-Uwe**
**14612 Falkensee (DE)**
• **Kümmlee, Horst**
**13505 Berlin (DE)**

(54) **VERFAHREN ZUR MAGNETISCHEN LAGERUNG EINES ROTORS**

(57)     Die Erfindung betrifft ein Verfahren zur magnetischen Lagerung eines Rotors (8) einer elektrischen rotierenden Maschine (2), welcher mit Hilfe einer Magnetlagervorrichtung (14) magnetisch gelagert ist, wobei ein Aktivteil (10) zum Rotieren des Rotors (8) in der Magnetlagervorrichtung (14) bereitgestellt wird, wobei eine Position des Rotors (8) derart geregelt wird, dass der Rotor (8) um eine erste Rotationsachse (6a) rotiert. Um möglichst einfach ein Schwingungsverhalten des magnetisch gelagerten Rotors während des Betriebes zu ermitteln, wird vorgeschlagen, dass die Magnetlagervorrichtung (14) Abstandssensoren (S1,S2,S3,S4) aufweist, welche in Umfangsrichtung um den Rotor (8) herum angeordnet sind, wobei während der Rotation des Rotors (8) um die erste Rotationsachse (6a) Abstände (d1,d2,d3,d4) zumindest eines Abstandssensors (S1,S2,S3,S4) zum Rotor (8) in Abhängigkeit eines Drehwinkels ($\alpha$) ermittelt werden, wobei mit Hilfe der Abstände (d1,d2,d3,d4) und der korrespondierenden Drehwinkel ($\alpha$) ein Schwingungsverhalten des Rotors (8) ermittelt wird.

FIG 2

EP 3 562 001 A1

**Beschreibung**

Die Erfindung betrifft ein Verfahren zur magnetischen Lagerung eines Rotors einer elektrischen rotierenden Maschine.

Ferner betrifft die Erfindung eine Steuereinheit mit Mitteln zur Durchführung eines derartigen Verfahrens.

Darüber hinaus betrifft die Erfindung ein Computerprogramm zur Durchführung eines derartigen Verfahrens bei Ablauf in einer Steuereinheit.

Des Weiteren betrifft die Erfindung ein Computerprogrammprodukt mit einem Computerprogramm.

Überdies betrifft die Erfindung eine Sensorvorrichtung zur Durchführung eines derartigen Verfahrens, welche zumindest vier Abstandssensoren und eine Steuereinheit aufweist.

Zudem betrifft die Erfindung eine Magnetlagervorrichtung mit Elektromagneten und mindestens einer Sensorvorrichtung.

Die Erfindung betrifft außerdem eine elektrische rotierende Maschine mit mindestens einer Magnetlagervorrichtung.

Ein derartiges Verfahren wird insbesondere in einem aktiven Magnetlager einer schnell drehenden elektrischen rotierenden Maschine, beispielsweise eines Motors, eines Generators, eines Kompressors oder einer Turbine, eingesetzt. Beispielsweise ist die schnell drehende elektrische rotierende Maschine mit einer Leistung von mindestens 1 Megawatt und einer Drehzahl von mindestens 5000 U/min betreibbar, die Erfindung ist jedoch nicht auf derartige Maschinen beschränkt.

Das Wuchten des Rotors einer derartigen durch Magnetlager gelagerten elektrischen rotierenden Maschine ist schwierig, da, sobald der Rotor in den Aktivteil, insbesondere Stator, eingefahren ist, nicht alle Wuchtebenen zugänglich sind und deshalb nicht mehr zur Verfügung stehen. Daher findet der Wuchtvorgang zumindest teilweise außerhalb des Aktivteils, beispielsweise auf Rollenböcken, statt, wobei Wuchtgewichte mit dem Rotor verbunden werden, um ein Schwingungsverhalten des Rotors zu minimieren. Dabei wird implizit vorausgesetzt, dass die Rotationsachse des Rotors im Betrieb der während des Wuchtvorgangs entspricht. In einem schwebenden Betrieb im Magnetlager unterscheidet sich jedoch die Lage der Rotationsachse von der Lage der Rotationsachse während des Wuchtvorgangs beispielsweise im Bereich von 100 $\mu$m. Durch die unterschiedlichen Rotationsachsen weist der Rotor beim Rotieren im Magnetlager demnach trotz Wuchten verstärkte Schwingungsamplituden auf.

Ein weiterer Fall, bei dem sich die Rotationsachse bezogen auf den Rotor verschiebt, ist eine mögliche thermische Verkrümmung des Rotors bedingt durch eine ungleichmäßige Erwärmung, beispielsweise durch zumindest einen Hot Spot. Durch eine thermische Verkrümmung findet ebenfalls eine Verschiebung der Rotationsachse statt, die zu einer Unwucht führt. Es wird ein Kompromiss zwischen Wuchten im kalten und erhitzten Zustand gefunden, um eine thermische Verkrümmung auszugleichen.

Die Patentschrift EP 2 158 411 B1 beschreibt eine Magnetlagersteuereinrichtung sowie die Verwendung eines dreiphasigen Umrichters zur Steuerung eines Magnetlagers.

Die Offenlegungsschrift WO 2017/133799 A1 beschreibt eine Sensorvorrichtung für eine Magnetlagervorrichtung aufweisend einen Verschiebungssensor und einen Sensorring, welcher die Form eines Hohlzylinders aufweist und dafür vorgesehen ist, kraftschlüssig mit einer Welle einer elektrischen rotierenden Maschine verbunden zu werden, wobei der Verschiebungssensor vom Sensorring durch einen Luftspalt getrennt ist.

Die Patentschrift EP 2 435 809 B1 beschreibt ein Verfahren zur Überwachung des Zustands eines Fanglagers einer Maschine, wobei vom Fanglager eine Rotorwelle der Maschine bei Ausfall eines Magnetlagers der Maschine aufgefangen wird, wobei das Fanglager einen Außenring und ein gegenüber dem Außenring rotierbar angeordneten Innenring aufweist, wobei das Magnetlager ausgeschaltet wird, wobei die Rotorwelle mit einem definierten Bewegungsablauf rotierend bewegt wird, wobei mittels eines Sensors eine physikalische Größe des Fanglagers gemessen wird. Die physikalische Größe kann beispielsweise in Form der Temperatur des Fanglagers oder in Form einer zwischen dem Außenring des Fanglagers und dem Fanglagerträger auftretenden Kraft oder in Form von Schwingungen des Fanglagers oder in Form eines zwischen Außenring und dem Fanglagerträger auftretenden Drucks oder in Form des Abstands zwischen Außenring und Innenring vorliegen.

Der Erfindung liegt die Aufgabe zugrunde, möglichst einfach ein Schwingungsverhalten des magnetisch gelagerten Rotors während des Betriebes zu ermitteln.

Diese Aufgabe wird erfindungsgemäß durch ein Verfahren zur magnetischen Lagerung eines Rotors einer elektrischen rotierenden Maschine, welcher mit Hilfe einer Magnetlagervorrichtung magnetisch gelagert ist, gelöst, wobei ein Aktivteil zum Rotieren des Rotors in der Magnetlagervorrichtung bereitgestellt wird, wobei eine Position des Rotors derartig geregelt wird, dass der Rotor um eine erste Rotationsachse rotiert, wobei die Magnetlagervorrichtung Abstandssensoren aufweist, welche in Umfangsrichtung um den Rotor herum angeordnet sind, wobei während der Rotation des Rotors um die erste Rotationsachse Abstände zumindest eines Abstandssensors zum Rotor in Abhängigkeit eines Drehwinkels ermittelt werden, wobei mit Hilfe der Abstände und der korrespondierenden Drehwinkel ein Schwingungsverhalten des Rotors ermittelt wird.

Ferner wird die Aufgabe erfindungsgemäß durch eine Steuereinheit mit Mitteln zur Durchführung eines derartigen Verfahrens gelöst.

Darüber hinaus wird die Aufgabe erfindungsgemäß durch ein Computerprogramm zur Durchführung eines derartigen Verfahrens bei Ablauf in einer Steuereinheit gelöst.

Des Weiteren wird die Aufgabe erfindungsgemäß durch ein Computerprogrammprodukt mit einem Computerprogramm gelöst.

Überdies wird die Aufgabe erfindungsgemäß durch eine Sensorvorrichtung zur Durchführung eines derartigen Verfahrens, welche zumindest vier Abstandssensoren und eine Steuereinheit aufweist, gelöst.

Zudem wird die Aufgabe erfindungsgemäß durch eine Magnetlagervorrichtung mit Elektromagneten und mindestens einer Sensorvorrichtung gelöst.

Außerdem wird die Aufgabe erfindungsgemäß durch eine elektrische rotierende Maschine mit mindestens einer Magnetlagervorrichtung gelöst.

Die in Bezug auf das Verfahren nachstehend angeführten Vorteile und bevorzugten Ausgestaltungen lassen sich sinngemäß auf die Steuereinheit, das Computerprogramm, das Computerprogrammprodukt, die Sensorvorrichtung, die Magnetlagervorrichtung und die elektrische rotierende Maschine übertragen.

Der Erfindung liegt die Überlegung zugrunde, ein Schwingungsverhalten eines bereits außerhalb des Aktivteils gewuchteten Rotors während einer Rotation um eine erste Rotationsachse in einem aktiven Magnetlager durch bereits vorhandene Abstandssensoren zu ermitteln, um gegebenenfalls Maßnahmen zu ergreifen. Das aktive Magnetlager ist beispielsweise als Radiallager und/oder als Axiallager ausgeführt. Eine Maßnahme bei einem fehlerhaften Schwingungsverhalten wäre beispielsweise, den Rotor erneut zu wuchten. Die Abstandssensoren, welche in Umfangsrichtung um den Rotor herum angeordnet sind, werden dazu verwendet, eine Position des Rotors derartig zu regeln, dass dieser im Wesentlichen in der Mitte des Magnetlagers schwebt. Um das Schwingungsverhalten zu ermitteln, werden während der Rotation des Rotors um die erste Rotationsachse Abstände zumindest eines Abstandssensors zum Rotor in Abhängigkeit eines Drehwinkels ermittelt. Beispielsweise werden die Abstände mit einer Schrittweite des Drehwinkels von 1° erfasst. Das Schwingungsverhalten des Rotors wird beispielsweise während einer Umdrehung anhand von Änderungen der Abstände zusammen mit dem korrespondierenden Drehwinkel ermittelt. Eine Abstandsänderung wird beispielsweise auf einen Referenzwert bezogen. Die Abstandssensoren ermöglichen eine sehr schnelle, genaue und zuverlässige Messung. Da die Abstandssensoren während des Betriebes für die Regelung verwendet werden, ist eine zusätzliche Schwingungsmessung einfach und nahezu ohne bauliche Veränderungen zu realisieren.

Durch eine Steuereinheit wird der Verfahrensablauf gesteuert. Die Mittel zur Durchführung eines derartigen Verfahrens umfassen ein Computerprogramm und beispielweise einen Mikrocontroller oder einen anderen programmierbaren Logikbaustein. Die Steuereinheit ist beispielsweise in der Sensorvorrichtung angeordnet. Insbesondere bei der Verwendung vorhandener Mikrocontroller ist die Schwingungsmessung leicht und kostengünstig zu realisieren. Durch eine Integration in die Sensorvorrichtung wird eine schnelle Signalverarbeitung ermöglicht.

Die elektrische rotierende Maschine ist beispielsweise ein Motor, ein Generator, ein Kompressor oder eine Turbine. Insbesondere ist die elektrische rotierende Maschine mit einer Leistung von mindestens 1 Megawatt und einer Drehzahl von mindestens 5000 U/min betreibbar. Da die Abstandssensoren mit einer hohen Taktfrequenz im kHz-Bereich betreibbar sind, sind Schwingungen des Rotors mit einer hohen Auflösung bei geringem Aufwand erfassbar.

In einer bevorzugten Ausgestaltung wird eine Lage einer zweiten Rotationsachse für ein definiertes Schwingungsverhalten des Rotors ermittelt, wobei die Position des Rotors derartig geregelt wird, dass der Rotor um die zweite Rotationsachse rotiert. Ein definiertes Schwingungsverhalten ergibt sich insbesondere aus vorgegebenen Abständen in Abhängigkeit des Drehwinkels. Als Referenz wird eine Keyphasor-Nut verwendet. Beispielsweise wird gezielt eine Unwucht erzeugt, um das Verhalten eines Wuchtgewichts nachzubilden. Durch eine Verschiebung der Lage der Rotationsachse ist ein definiertes Schwingungsverhalten ohne Hinzufügen von Wuchtgewichten erreichbar. Das Schwingungsverhalten ist somit dynamisch und während des Betriebes veränderbar.

Besonders vorteilhaft wird die Lage der zweiten Rotationsachse so gewählt, dass der Rotor ein minimales Schwingungsverhalten aufweist. Das Schwingungsverhalten ist somit dynamisch und während des Betriebes minimierbar.

Bei einer weiteren vorteilhaften Ausführungsform wird die Lage der zweiten Rotationsachse für verschiedene Drehzahlen und/oder Temperaturen, insbesondere hinsichtlich eines minimalen Schwingungsverhaltens, optimiert. Ein temperaturabhängiges Schwingungsverhalten tritt beispielsweise bei einer thermischen Verkrümmung des Rotors auf, wobei eine thermische Verkrümmung durch lokale Erwärmung aufgrund von Wirbelströmen im Rotor entsteht. Das Schwingungsverhalten des Rotors ist daher für verschiedene Zeitpunkte und Betriebsmodi optimierbar.

Besonders vorteilhaft wird während des Betriebes der elektrischen rotierenden Maschine die Lage der zweiten Rotationsachse ermittelt und die Position des Rotors derart geregelt, dass der Rotor um die zweite Rotationsachse rotiert. Durch eine derartige dynamische Regelung werden die Standzeiten der elektrischen rotierenden Maschine reduziert, was zu einer erheblichen Kostenersparnis führt.

In einer weiteren vorteilhaften Ausgestaltung werden Rundlauffehler des Rotors bereitgestellt, wobei mit Hilfe der Rundlauffehler, der Abstände und der korrespondierenden Drehwinkel das Schwingungsverhalten des Rotors ermittelt wird. Derartige Rundlauffehler ergeben sich aus mechanischen Unebenheiten und elektrischen Inhomogenitäten. Die Rundlauffehler werden beispielsweise tabellarisch zusammen mit dem zugehörigen Drehwinkel in einem Speicher abgelegt. Durch die Rundlauffehler wird eine höhere Genauigkeit der Schwingungserfassung und der Regelung erreicht.

Besonders vorteilhaft werden die Rundlauffehler, insbesondere bei einer Kalibrierung, mit Hilfe der Abstandssensoren in Abhängigkeit des Drehwinkels ermittelt. Eine Ermittlung der Rundlauffehler mit Hilfe der Abstandssensoren erfordert keine zusätzlichen Komponenten, was zu einer Reduzierung der Kosten und des Platzbedarfs führt.

Bei einer weiteren vorteilhaften Ausführungsform weist zumindest ein erster Abstandssensor einen im Wesentlichen diametral gegenüberliegenden zweiten Abstandssensor auf. Durch eine derartige Anordnung der Sensoren wird eine Auswertung erleichtert.

Besonders vorteilhaft ist zumindest ein dritter Abstandssensor im Wesentlichen senkrecht zu einem ersten Abstandssensor angeordnet. Durch eine derartige Anordnung der Sensoren wird eine Auswertung erleichtert.

Besonders vorteilhaft sind die Sensoren als induktive Verschiebungssensoren ausgeführt, durch welche die Abstände kontaktlos erfasst werden. Ein induktiver Verschiebungssensor wird auch Wirbelstromsensor genannt. Derartige Sensoren sind sehr genau, kostengünstig und zuverlässig.

Im Folgenden wird die Erfindung anhand der in den Figuren dargestellten Ausführungsbeispiele näher beschrieben und erläutert.

Es zeigen:

FIG 1    einen Längsschnitt einer elektrischen rotierenden Maschine,

FIG 2    einen Querschnitt einer elektrischen rotierenden Maschine im Bereich einer Magnetlagervorrichtung,

FIG 3    einen vergrößerten Querschnitt einer elektrischen rotierenden Maschine im Bereich einer Magnetlagervorrichtung und

FIG 4    eine schematische Darstellung eines typischen Verlaufs einer Sensor-Runout-Kurve.

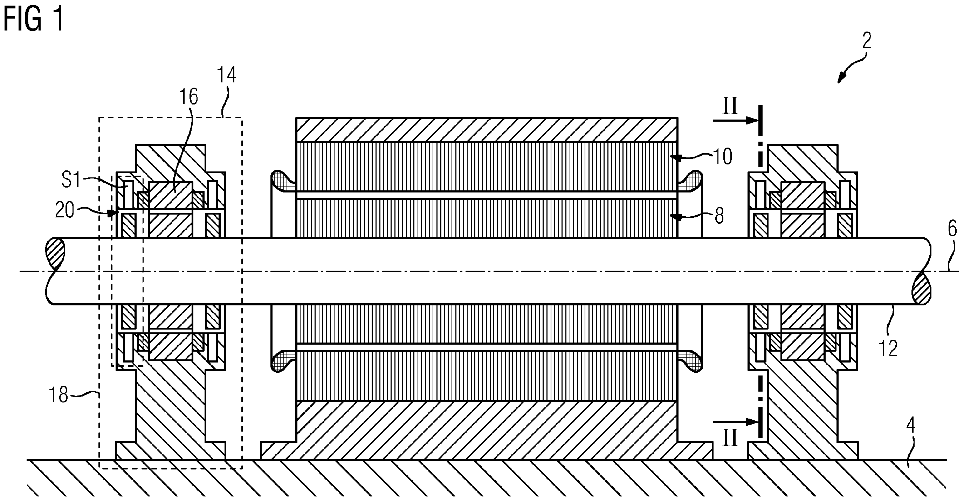

FIG 1 zeigt eine elektrische rotierende Maschine 2, welche auf einem Fundament 4 steht. Die elektrische rotierende Maschine 2 ist als Motor oder als Generator ausgeführt und weist einen um eine Rotationsachse 6 rotierbaren Rotor 8 und einen Aktivteil 10 auf, wobei der Aktivteil als ein den Rotor 8 umgebender Stator ausgeführt ist. Der Rotor 8 weist eine Welle 12 auf und ist an beiden axialen Enden der Welle 12 durch jeweils eine aktive Magnetlagervorrichtung 14 berührungslos gelagert. Alternativ ist die elektrische rotierende Maschine 2 als Kompressor oder Turbine mit einem Rotor 8 ausgeführt, welcher durch eine aktive Magnetlagervorrichtung 14 berührungslos gelagert ist.

Die aktive Magnetlagervorrichtung 14 umfasst Elektromagnete 16, welche um den Umfang der Welle 12 des Rotors 8 herum angeordnet sind. Über die Elektromagnete 16 wird ein Magnetfeld angeregt, welches auf den Rotor 8 eine Magnetkraft ausübt, sodass der Rotor 8 bei entsprechender Regelung berührungslos gelagert wird. Die Elektromagnete 16 werden so angesteuert, dass zumindest ein Teil des von ihnen erzeugten Magnetfeldes im Wesentlichen mit der gleichen Drehzahl in Umfangsrichtung rotiert wie der vom Aktivteil 10 angetriebene Rotor 8.

Über eine Sensorvorrichtung 18 wird eine Lage des Rotors 8 in der Magnetlagervorrichtung 14 zur Regelung der Rotorposition ermittelt. Die Sensorvorrichtung 18 umfasst um den Umfang der Welle 12 herum angeordnete Abstandssensoren S1, S2, welche als induktive Verschiebungssensoren ausgestaltet und dafür geeignet sind, Abstände, insbesondere Abstandsänderungen, des Rotors 8 zu den jeweiligen Abstandssensoren S1, S2 in Abhängigkeit eines Drehwinkels $\alpha$ kontaktlos zu erfassen. Als Referenz dient beispielsweise eine Keyphasor-Nut. Beispielsweise werden die Abstandsänderungen mit einer Schrittweite des Drehwinkels $\alpha$ von 1° erfasst. Die induktiven Verschiebungssensoren werden beispielsweise dazu herangezogen, über einen Luftspalt 20 eine Impedanz und bevorzugt eine Änderung der Impedanz zu messen.

Die Magnetlagervorrichtung 14 ist exemplarisch als Radiallager ausgeführt. Eine Verwendung der Sensorvorrichtung 18 für ein Axiallager ist ebenfalls Gegenstand der Patentanmeldung, wobei im Falle eines Axiallagers die Sensorvorrichtung 18 dafür vorgesehen ist, die Position des Rotors 8 in axialer Richtung zu ermitteln.

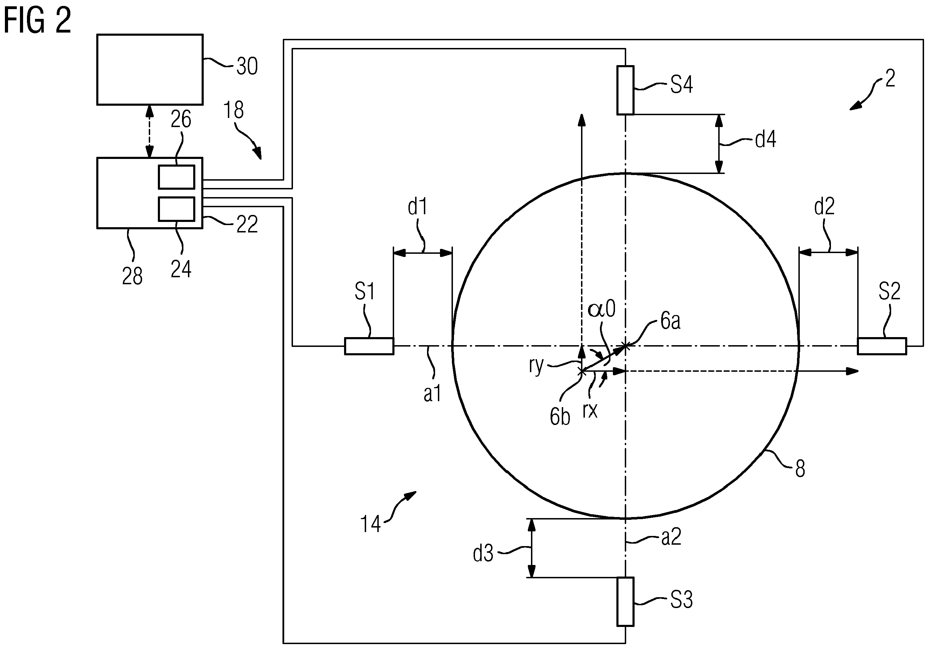

FIG 2 zeigt einen Querschnitt einer elektrischen rotierenden Maschine 2 im Bereich einer Magnetlagervorrichtung 14, mit der der Rotor 8 berührungslos gelagert ist. Die Magnetlagervorrichtung 14 umfasst eine Sensorvorrichtung 18, welche zwei Paar der diametral gegenüberliegenden Abstandssensoren S1, S2, S3, S4 aufweist, wobei die Abstandssensoren S1, S2, S3, S4, wie in FIG 1, als induktive Verschiebungssensoren ausgestaltet sind. Die diametral gegenüberliegenden Sensorpaare S1, S2, S3, S4, bilden jeweils eine Achse a1, a2, wobei die zweite Achse a2 des zweiten Paares S3, S4 um im Wesentlichen 90° zur ersten Achse a1 des ersten Paares S1, S2 gedreht angeordnet ist.

Die Abstandssensoren S1, S2, S3, S4 sind mit einer Zentraleinheit 22 verbunden, welche eine Auswerteeinheit 24, eine Steuereinheit 26 und einen Speicher 28 umfasst. Eine Übertragung der gemessenen Sensordaten an die Zentraleinheit 22 erfolgt beispielsweise elektrisch, insbesondere kabelgebunden, oder optisch über Lichtleiter. Die Abstandssensoren S1, S2, S3, S4 sind als induktive Verschiebungssensoren ausgeführt, durch welche jeweils die Abstände d1, d2, d3, d4 des jeweiligen Abstandssensors S1, S2, S3, S4 zum Rotor 8 kontaktlos erfasst werden. Die ermittelten Daten werden digitalisiert und zumindest teilweise an eine IT-Infrastruktur 30 gesendet. Eine IT-Infrastruktur 30 ist beispielsweise mindestens ein lokales Computersystem und/oder eine Cloud. Die IT-Infrastruktur 30 stellt Speicherplatz, Rechenleistung und/oder Anwendungssoftware bereit. In der Cloud werden Speicherplatz, Rechenleistung und/oder Anwendungssoftware als Dienstleistung über das Internet zur Verfügung gestellt. Die digitale Datenübertragung an die IT-Infrastruktur 30 findet drahtlos, drahtgebunden oder optisch statt. Beispielsweise werden die Daten über Bluetooth oder WLAN übertragen.

Bevor der Rotor 8 mit den Elektromagneten 16 der Magnetlagervorrichtung 18 betrieben wird, wird dieser optional, beispielsweise auf Rollenböcken, gewuchtet, sodass, insbesondere durch Hinzufügen von Wuchtgewichten, eine nährungsweise kraftfreie Rotation ermöglicht wird. Beim Wuchten auf Rollenböcken dreht sich der Rotor um eine zweite Rotationsachse 6b, welche außerhalb der geometrischen Mitte des Rotors 8 angeordnet ist. Ein Schwingungsverhalten des Rotors 8 wird mit Hilfe der Abstandssensoren S1, S2, S3, S4 optimiert, wobei Schwingungen des Rotors 8 durch Erfassung von Abstandsänderungen des Rotors 8 vom jeweiligen Abstandssensor S1, S2, S3, S4 während jeweils einer Umdrehung erfasst werden. Schwingungen während der Drehung des Rotors 8 werden beispielsweise durch Platzierung von Wuchtgewichten auf dem Rotor 8, insbesondere iterativ, minimiert.

Darüber hinaus werden optional außerhalb der Magnetlagervorrichtung bei der Rotation des Rotors 8 um die zweite Rotationsachse 6b Rundlauffehler g des Rotors 8 ermittelt. Derartige Rundlauffehler ergeben sich aus mechanischen Unebenheiten und elektrischen Inhomogenitäten. Die Rundlauffehler g werden nach Betrag und Phase, das heißt nach der Position auf dem Rotor 8 in Abhängigkeit des Drehwinkels $\alpha$, beispielsweise tabellarisch in einer Sensor-Runout-Tabelle, im Speicher 28 der Magnetlagervorrichtung 18 abgelegt. Eine Schrittweite des Drehwinkels $\alpha$ in der Sensor-Runout-Tabelle beträgt beispielsweise 1°. Zusätzlich oder alternativ werden die Daten in einem Speicher in der IT-Infrastruktur 30 abgelegt.

Der Rotor 8 wird durch die Elektromagneten 16 in der Magnetlagervorrichtung 18 schwebend gelagert, wobei der Rotor 8 durch den Aktivteil 10, welcher in FIG 2 aus Gründen der Übersichtlichkeit nicht dargestellt ist, angetrieben wird. Dabei wird die Position des Rotors 8 derart geregelt, dass der Rotor 8 um eine erste Rotationsachse 6a rotiert, deren Position sich von der der zweiten Rotationsachse 6b unterscheidet. Insbesondere befindet sich die erste Rotationsachse 6a zumindest näher an der geometrischen Mitte des Rotors 8 als die zweite Rotationsachse 6b.

Während der Rotation des Rotors 8 um die erste Rotationsachse 6a wird jeweils ein Abstand d1, d2, d3, d4 des jeweiligen Abstandssensors S1, S2, S3, S4 zum Rotor 8 in Abhängigkeit eines Drehwinkels $\alpha$ des Rotor 8 ermittelt. Optional werden die ermittelten Rundlauffehler g mit den jeweiligen Abständen d1, d2, d3, d4, beispielsweise additiv, kombiniert, wobei mit Hilfe der Rundlauffehler g, der Abstände d1, d2, d3, d4 und der korrespondierenden Drehwinkel $\alpha$ ein Schwingungsverhalten des Rotors 8 ermittelt wird. Das Schwingungsverhalten wird beispielsweise aus einer Änderung der Abstände d1, d2, d3, d4 über den Drehwinkel $\alpha$ ermittelt.

Um ein minimales Schwingungsverhalten des Rotors 8 zu erzielen, wird daraufhin die Lage einer zweiten Rotationsachse 6b ermittelt. Die Lage der zweiten Rotationsachse 6b wird anhand der Änderung der Abstände d1, d2, d3, d4 über den Drehwinkel $\alpha$ bei Rotation um die erste Rotationsachse 6a ermittelt, wobei die Lage der zweiten Rotationsachse 6b insbesondere so gewählt wird, dass die Änderung der Abstände d1, d2, d3, d4 über den Drehwinkel $\alpha$ bei Rotation um die zweite Rotationsachse 6b minimal wird.

Alternativ wird die Lage der zweiten Rotationsachse 6b so gewählt, dass eine gezielte Unwucht erzeugt wird. Eine derartige gezielte Unwucht wird beispielsweise dafür verwendet, ein Verhalten zumindest eines Wuchtgewichts nachzubilden, um eine Position für zumindest ein Wuchtgewicht zu ermitteln.

Nach der Ermittlung der Lage der zweiten Rotationsachse 6b wird die Position des Rotors 8 derart geregelt, dass der Rotor 8 um die zweite Rotationsachse 6b rotiert. Mit Hilfe der Regelung, welche die Elektromagnete 16 ansteuert, wird der Rotor 8 um einen Achsenoffset mit einem Betrag des Achsenoffsets r0 und einer Phase $\alpha$0 des Achsenoffsets von der ersten Rotationsachse 6a zur zweiten Rotationsachse 6b verschoben.

Neben dem Wuchten ist eine Verschiebung der Rotationsachse 6a, 6b dynamisch durchführbar, um beispielsweise eine thermische Verkrümmung des Rotors 8, welche insbesondere durch eine wirbelstrominduzierte Erwärmung des Rotors 8 auftritt, auszugleichen. Eine durch die thermische Verkrümmung entstandene Unwucht wird beispielsweise über Schwingungsmaxima in Bezug auf ein Keyphasor-Signal ermittelt, wodurch eine Phasenlage und Größe der Unwucht festgestellt wird. Die Sensor-Runout-Tabelle wird daraufhin, analog zum Wuchten, befüllt. Daraufhin wird die Rotationsachse 6a, 6b online, das heißt während des Betriebes der elektrischen rotierenden Maschine, durch die Regelung verschoben, sodass die durch die Verkrümmung entstandene Unwucht kompensiert wird. Die weitere Ausführung der Magnetlagervorrichtung 14 in FIG 2 entspricht der in FIG 1.

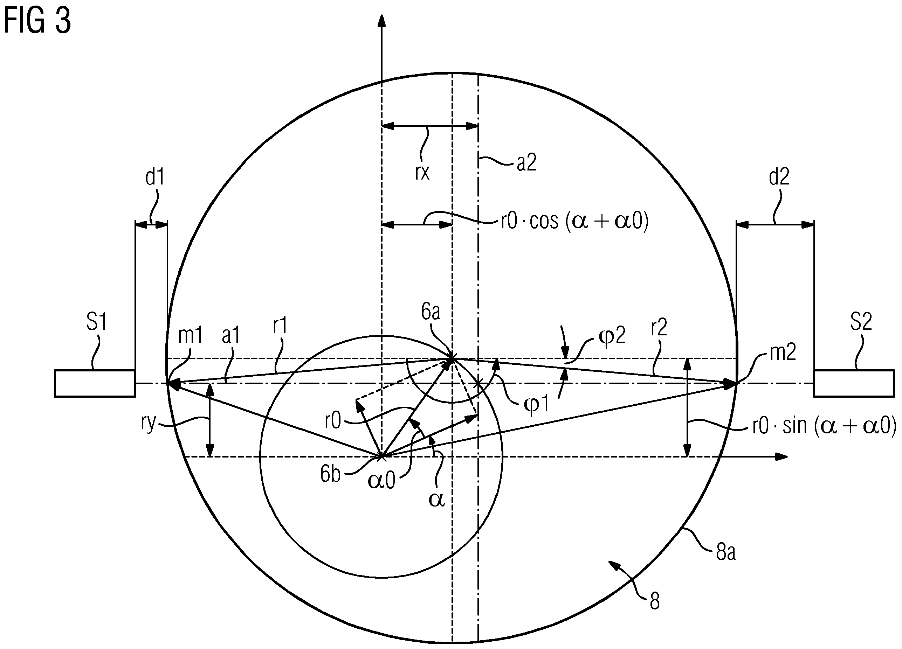

FIG 3 zeigt einen Querschnitt einer elektrischen rotierenden Maschine 2 im Bereich einer Magnetlagervorrichtung 14. Aus Gründen einer besseren Verständlichkeit ist, verglichen mit FIG 2, nur ein Paar der diametral gegenüberliegenden Abstandssensoren S1, S2 dargestellt. Der Rotor 8 ist um einen Achsenoffset mit einem Betrag des Achsenoffsets r0 und einer Phase $\alpha$0 des Achsenoffsets von der ersten Rotationsachse 6a zur zweiten Rotationsachse 6b verschoben und ist um die zweite Rotationsachse 6b rotierbar. Dem ersten Abstandssensor S1 ist ein erster Messpunkt m1 und dem zweiten Abstandssensor S2 ist ein zweiter Messpunkt m2 zugeordnet. Beide Messpunkte m1, m2 bezeichnen jeweils einen Schnittpunkt einer Rotoroberfläche 8a mit der ersten Achse a1, die in FIG 3 um den Betrag |ry| über der zweiten Rotationsachse 6b angeordnet ist, wobei die zweite Rotationsachse 6b außerhalb der geometrischen Mitte des Rotors 8 angeordnet ist. Wird der Rotor 8 um die zweite Rotationsachse 6b gedreht, werden von den Abstandssensoren S1, S2 unterschiedliche Abstände d1, d2 gemessen, welche jeweils in Abhängigkeit vom Drehwinkel $\alpha$ des Rotors 8 variieren. Die Abstandswerte d1, d2 der Abstandssensoren S1, S2 werden auf eine kalibrierte Referenzposition normiert. Im Folgenden werden die Positionen der Messpunkte m1, m2 in Abhängigkeit des aktuellen Drehwinkels $\alpha$ des Rotors 8 berechnet, wobei aus den Positionen der Messpunkte m1, m2 die Variation der Abstände d1, d2 in Abhängigkeit des Drehwinkels $\alpha$ und damit das Schwingungsverhalten des Rotors 8 ermittelbar sind.

Legt man für einen bestimmten Drehwinkel $\alpha$ ein festes Koordinatensystem mit Ursprung in der zweiten Rotationsachse 6b fest, so sind die Messpunkte m1, m2 vektoriell definiert durch

$$m1 = \mathrm{r0} + \mathrm{r1}$$

für Abstandssensor S1 und

$$m2 = \mathrm{r0} + \mathrm{r2},$$

für Abstandssensor S2, wobei m1, m2, r0, r1 und r2 jeweils zweidimensionale Vektoren sind.

Der Vektor r0 des Achsenoffsets ist die Verbindung zwischen der zweiten Rotationsachse 6b und der ersten Rotationsachse 6a. Er ist definiert durch

$$r0 = |r0| \cdot \begin{pmatrix} \cos(\alpha + \alpha0) \\ \sin(\alpha + \alpha0) \end{pmatrix}$$

wobei eine Abhängigkeit von der Phase des Achsenoffsets $\alpha0$ und dem Drehwinkel $\alpha$ besteht.

Der Vektor r1 ist der Vektor zwischen der ersten Rotationsachse 6a, welche im Wesentlichen in der geometrischen Mitte des Rotors 8 liegt, und dem Messpunkt m1. Er ist definiert durch

$$r1 = |r| \cdot \begin{pmatrix} \cos(\varphi1) \\ \sin(\varphi1) \end{pmatrix}$$

mit |r| als Radius des Rotors 8 und dem ersten Hilfswinkel $\varphi1$.

Der Vektor r2 ist der Vektor zwischen der ersten Rotationsachse 6a, welche im Wesentlichen in der geometrischen Mitte des Rotors 8 liegt, und dem Messpunkt m2. Er ist definiert durch

$$r2 = |r| \cdot \begin{pmatrix} \cos(\varphi2) \\ \sin(\varphi2) \end{pmatrix}$$

mit |r| als Radius des Rotors 8 und dem zweiten Hilfswinkel $\varphi2$.

Die unbekannten Hilfswinkel $\varphi1$, $\varphi2$ werden in Abhängigkeit des Drehwinkels $\alpha$, der Phase $\alpha0$ und des Betrags |r0| des Achsenoffsets $\alpha0$ sowie des Betrags des Rotorradius |r| berechnet. Es gilt

$$|ry| = |r0| \cdot \sin(\alpha0) = m1y = m2y$$

Daraus ergibt sich für die y-Komponenten der Messpunkte m1y, m2y

$$m1y = |r0| \cdot \sin(\alpha + \alpha0) + |r| \cdot \sin(\varphi1)$$

und

$$m2y = |r0| \cdot \sin(\alpha + \alpha 0) + |r| \cdot \sin(\varphi 2)$$

Daraus ergibt sich wiederum für die Hilfswinkel φ1, φ2

$$\varphi 1 = 180° - \arcsin\left(\frac{|ry| - |r0|\sin(\alpha + \alpha 0)}{|r|}\right)$$

und

$$\varphi 2 = \arcsin\left(\frac{|ry| - |r0|\sin(\alpha + \alpha 0)}{|r|}\right)$$

Aus den berechneten Werten φ1 bzw. φ2 werden die x-Komponenten der Messpunkte m1x, m2x berechnet:

$$m1x = |r0| \cdot \cos(\alpha + \alpha 0) + |r| \cdot \cos(\varphi 1)$$

$$m2x = |r0| \cdot \cos(\alpha + \alpha 0) + |r| \cdot \cos(\varphi 2)$$

Somit ergibt sich für die Messpunkte m1, m2

$$m1 = \begin{pmatrix} |r0| \cdot \cos(\alpha + \alpha 0) + |r| \cdot \cos\left(180° - \arcsin\left(\frac{|ry| - |r0|\sin(\alpha + \alpha 0)}{|r|}\right)\right) \\ |r0| \cdot \sin(\alpha + \alpha 0) + |r| \cdot \sin\left(180° - \arcsin\left(\frac{|ry| - |r0|\sin(\alpha + \alpha 0)}{|r|}\right)\right) \end{pmatrix}$$

und

$$m2 = \begin{pmatrix} |r0| \cdot \cos(\alpha + \alpha 0) + |r| \cdot \cos\left(\arcsin\left(\frac{|ry| - |r0|\sin(\alpha + \alpha 0)}{|r|}\right)\right) \\ |r0| \cdot \sin(\alpha + \alpha 0) + |r| \cdot \sin\left(\arcsin\left(\frac{|ry| - |r0|\sin(\alpha + \alpha 0)}{|r|}\right)\right) \end{pmatrix}$$

Damit sind die Positionen der Messpunkte m1, m2 in Abhängigkeit des Drehwinkels α bekannt. Mit Hilfe der Messpunkte m1, m2 werden die Abstände d1, d2 der Abstandssensoren S1, S2 in Abhängigkeit des Drehwinkels α während einer Rotorumdrehung um die zweite Rotationsachse 6b ermittelt, wobei die Abstände d1, d2 in einer Kurve darstellbar sind. Diese Kurve wird als Runout-Kurve im Speicher 28 abgelegt. Der Rotor 8 ist für diese Runout-Kurve bereits auf Rollenböcken gewuchtet worden, weswegen dafür ein optimierter Schwingungszustand vorliegt. Die weitere Ausführung der Magnetlagervorrichtung 14 in FIG 3 entspricht der in FIG 2.

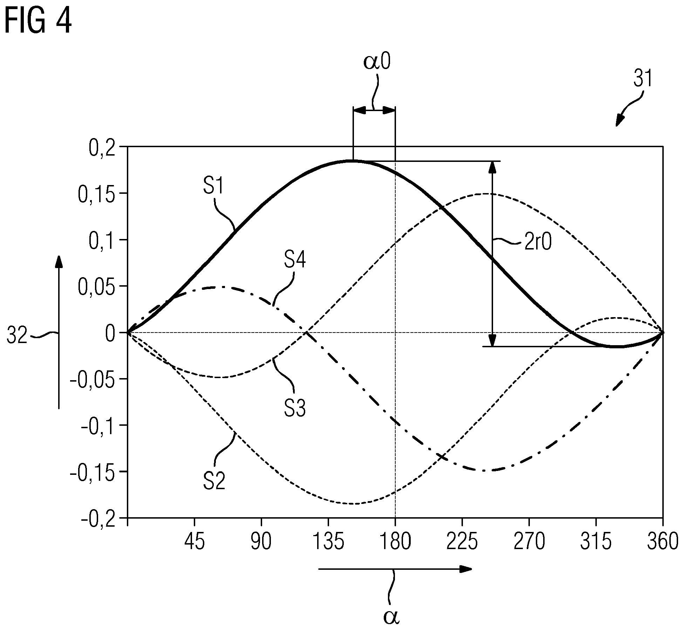

FIG 4 zeigt eine schematische Darstellung eines typischen Verlaufs einer Sensor-Runout-Kurve 31, wobei der Rotor 8 um die zweite Rotationsachse 6b rotiert. Der Verlauf der Sensor-Runout-Kurve 31 ist auch, wie in der Beschreibung von FIG 3 gezeigt, rechnerisch ermittelbar. Exemplarisch wurden für den Rotorradius r=150mm, für den Betrag des Achsenoffsets r0=0,1mm, für die Phase des Achsenoffsets α0=30° gewählt.

Zusammenfassend betrifft die Erfindung ein Verfahren zur magnetischen Lagerung eines Rotors 8 einer elektrischen rotierenden Maschine 2, welcher mit Hilfe einer Magnetlagervorrichtung 14 magnetisch gelagert ist, wobei ein Aktivteil 10 zum Rotieren des Rotors 8 in der Magnetlagervorrichtung 14 bereitgestellt wird, wobei eine Position des Rotors 8 derartig geregelt wird, dass der Rotor 8 um eine erste Rotationsachse 6a rotiert. Um möglichst einfach ein Schwingungsverhalten des magnetisch gelagerten Rotors während des Betriebes zu ermitteln, wird vorgeschlagen, dass die Magnetlagervorrichtung 14 Abstandssensoren S1, S2, S3, S4 aufweist, welche in Umfangsrichtung um den Rotor 8 herum angeordnet sind, wobei während der Rotation des Rotors 8 um die erste Rotationsachse 6a Abstände d1, d2, d3, d4 zumindest eines Abstandssensors S1, S2, S3, S4 zum Rotor 8 in Abhängigkeit eines Drehwinkels $\alpha$ ermittelt werden, wobei mit Hilfe der Abstände d1, d2, d3, d4 und der korrespondierenden Drehwinkel $\alpha$ ein Schwingungsverhalten des Rotors 8 ermittelt wird.

**Patentansprüche**

1. Verfahren zur magnetischen Lagerung eines Rotors (8) einer elektrischen rotierenden Maschine (2), welcher mit Hilfe einer Magnetlagervorrichtung (14) magnetisch gelagert ist,
   wobei ein Aktivteil (10) zum Rotieren des Rotors (8) in der Magnetlagervorrichtung (14) bereitgestellt wird,
   wobei eine Position des Rotors (8) derartig geregelt wird, dass der Rotor (8) um eine erste Rotationsachse (6a) rotiert,
   wobei die Magnetlagervorrichtung (14) Abstandssensoren (S1, S2,S3,S4) aufweist, welche in Umfangsrichtung um den Rotor (8) herum angeordnet sind,
   wobei während der Rotation des Rotors (8) um die erste Rotationsachse (6a) Abstände (d1,d2,d3,d4) zumindest eines Abstandssensors (S1,S2,S3,S4) zum Rotor (8) in Abhängigkeit eines Drehwinkels ($\alpha$) ermittelt werden,
   wobei mit Hilfe der Abstände (d1,d2,d3,d4) und der korrespondierenden Drehwinkel ($\alpha$) ein Schwingungsverhalten des Rotors (8) ermittelt wird.

2. Verfahren nach Anspruch 1,
   wobei eine Lage einer zweiten Rotationsachse (6b) für ein definiertes Schwingungsverhalten des Rotors (8) ermittelt wird,
   wobei die Position des Rotors (8) derartig geregelt wird, dass der Rotor (8) um die zweite Rotationsachse (6b) rotiert.

3. Verfahren nach Anspruch 2,
   wobei die Lage der zweiten Rotationsachse (6b) so gewählt wird, dass der Rotor (8) ein minimales Schwingungsverhalten aufweist.

4. Verfahren nach einem der Ansprüche 1 oder 2,
   wobei die Lage der zweiten Rotationsachse (6b) für verschiedene Drehzahlen und/oder Temperaturen, insbesondere hinsichtlich eines minimalen Schwingungsverhaltens, optimiert wird.

5. Verfahren nach einem der Ansprüche 2 bis 4,
   wobei während des Betriebes der elektrischen rotierenden Maschine (2) die Lage der zweiten Rotationsachse (6b) ermittelt und die Position des Rotors (8) derart geregelt wird, dass der Rotor (8) um die zweite Rotationsachse (6b) rotiert.

6. Verfahren nach einem der vorherigen Ansprüche,
   wobei Rundlauffehler (g) des Rotors (8) bereitgestellt werden,
   wobei mit Hilfe der Rundlauffehler (g), der Abstände (d1,d2, d3,d4) und der korrespondierenden Drehwinkel ($\alpha$) das Schwingungsverhalten des Rotors (8) ermittelt wird.

7. Verfahren nach Anspruch 6,
   wobei die Rundlauffehler (g), insbesondere bei einer Kalibrierung, mit Hilfe der Abstandssensoren (S1,S2,S3,S4) in Abhängigkeit des Drehwinkels ($\alpha$) ermittelt werden.

8. Verfahren nach einem der vorherigen Ansprüche,
   wobei zumindest ein erster Abstandssensor (S1) einen im Wesentlichen diametral gegenüberliegenden zweiten Abstandssensor (S2) aufweist.

9. Verfahren nach einem der vorherigen Ansprüche,
   wobei zumindest ein dritter Abstandssensor (S3) im Wesentlichen senkrecht zu einem ersten Abstandssensor (S1) angeordnet ist.

**10.** Verfahren nach einem der vorherigen Ansprüche,
wobei zumindest einer der Abstandssensoren (S1,S2,S3,S4) als induktiver Abstandssensor ausgeführt ist, durch welchen einer der Abstände (d1,d2,d3,d4) kontaktlos erfasst wird.

**11.** Steuereinheit (26) mit Mitteln zur Durchführung eines Verfahrens nach einem der Ansprüche 1 bis 10.

**12.** Computerprogramm zur Durchführung eines Verfahrens nach einem der Ansprüche 1 bis 10 bei Ablauf in einer Steuereinheit (26) nach Anspruch 11.

**13.** Computerprogrammprodukt mit einem Computerprogramm nach Anspruch 12.

**14.** Sensorvorrichtung (18) zur Durchführung eines Verfahrens nach einem der Ansprüche 1 bis 10,
welche zumindest vier Abstandssensoren (S1,S2,S3,S4) und eine Steuereinheit (26) nach Anspruch 11 aufweist.

**15.** Magnetlagervorrichtung (14) mit Elektromagneten (16) und mindestens einer Sensorvorrichtung (18) nach Anspruch 14.

**16.** Elektrische rotierende Maschine (2) mit mindestens einer Magnetlagervorrichtung (14) nach Anspruch 15.

FIG 1

EP 3 562 001 A1

FIG 2

EP 3 562 001 A1

FIG 3

EP 3 562 001 A1

FIG 4

Europäisches Patentamt
European Patent Office
Office européen des brevets

## EUROPÄISCHER RECHERCHENBERICHT

**Nummer der Anmeldung**

EP 18 16 9857

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/041839 A1 (ABB SCHWEIZ AG [CH]) 16. März 2017 (2017-03-16) * Seite 4, Zeile 22 - Seite 4, Zeile 30; Abbildung 1 * * Seite 7, Zeile 7 - Seite 7, Zeile 13; Abbildung 1 * * Seite 10, Zeile 24 - Seite 11, Zeile 32; Abbildung 3 * ----- | 1-16 | INV. H02K7/09 F16C32/04 |
| Y | US 2014/159526 A1 (OHBAYASHI TETSURO [JP] ET AL) 12. Juni 2014 (2014-06-12) * Absatz [0027] - Absatz [0050]; Abbildungen 1,2 * ----- | 2-16 | |
| Y | JP 2011 231760 A (SHIMADZU CORP) 17. November 2011 (2011-11-17) * Absatz [0009] - Absatz [0016]; Abbildungen 1,2 * * Absatz [0057] * * Absatz [0041] - Absatz [0043]; Abbildung 9 * ----- | 2-16 | |
| Y | US 6 249 067 B1 (SCHOB RETO [CH] ET AL) 19. Juni 2001 (2001-06-19) * Spalte 6, Zeile 23 - Spalte 7, Zeile 24; Abbildungen 1-3 * * Spalte 9, Zeile 62 - Spalte 10, Zeile 45; Abbildung 8 * ----- | 2-10 | **RECHERCHIERTE SACHGEBIETE (IPC)** H02K F16C |
| A | EP 2 781 775 A1 (RIETER CZ S R O [CZ]) 24. September 2014 (2014-09-24) * Zusammenfassung; Abbildungen 1-3 * ----- | 1-16 | |
| A | JP H03 135346 A (SECOH GIKEN KK) 10. Juni 1991 (1991-06-10) * Zusammenfassung; Abbildungen 1,2,3a,4,5 * ----- | 1-16 | |

Der vorliegende Recherchenbericht wurde für alle Patentansprüche erstellt

| Recherchenort | Abschlußdatum der Recherche | Prüfer |
|---|---|---|
| Den Haag | 28. September 2018 | Zavelcuta, Florin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 18 16 9857

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-09-2018

| Im Recherchenbericht angeführtes Patentdokument | Datum der Veröffentlichung | Mitglied(er) der Patentfamilie | Datum der Veröffentlichung |
|---|---|---|---|
| WO 2017041839 A1 | 16-03-2017 | KEINE | |
| US 2014159526 A1 | 12-06-2014 | CN 103732931 A | 16-04-2014 |
| | | EP 2799732 A1 | 05-11-2014 |
| | | JP 5279890 B2 | 04-09-2013 |
| | | JP 2013139844 A | 18-07-2013 |
| | | KR 20140028130 A | 07-03-2014 |
| | | US 2014159526 A1 | 12-06-2014 |
| | | WO 2013100104 A1 | 04-07-2013 |
| JP 2011231760 A | 17-11-2011 | KEINE | |
| US 6249067 B1 | 19-06-2001 | KEINE | |
| EP 2781775 A1 | 24-09-2014 | CN 104060354 A | 24-09-2014 |
| | | CZ 304680 B6 | 27-08-2014 |
| | | EP 2781775 A1 | 24-09-2014 |
| | | US 2014285185 A1 | 25-09-2014 |
| JP H03135346 A | 10-06-1991 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2158411 B1
- WO 2017133799 A1

- EP 2435809 B1